# EUROPÄISCHE PATENTSCHRIFT

(11) **EP 0 752 268 B1**
(45) Veröffentlichungstag und Bekanntmachung des Hinweises auf die Patenterteilung: **12.12.2001**
(21) Anmeldenummer: 96110672.1
(22) Anmeldetag: 02.07.1996
(51) Int. Cl.: B01J 19/24, B01J 19/00, C08F 212/08, C08F 220/12, C08F 220/44

(54) **Verfahren und Vorrichtung zur kontinuierlichen Herstellung von Polymeren**
Method and apparatus for the continuous production of polymers
Procédé et dispositif pour la production de polymères en continu

(30) Priorität: 03.07.1995 DE 19524182
(43) Veröffentlichungstag der Anmeldung: 08.01.1997
(73) Patentinhaber: BASF AKTIENGESELLSCHAFT, 67056 Ludwigshafen (DE)
(72) Erfinder: Fischer, Wolfgang, Dr., 67067 Ludwigshafen (DE); Baumgärtel, Michael, Dr., 67227 Frankenthal (DE)
(74) Vertreter: Isenbruck, Günter, Dr.

(56) Entgegenhaltungen:
- EP-A- 0 226 879
- EP-A- 0 307 238
- EP-A- 0 472 491
- EP-A- 0 519 266
- DE-A- 3 430 247
- JP-A- 5 111 691
- US-A- 4 062 857

## Beschreibung

Die Erfindung betrifft ein Verfahren und eine Vorrichtung zur kontinuierlichen Herstellung von Polymeren aus Reaktionskomponenten, insbesondere von Copolymeren aus Styrol und Acrylnitril, durch Masse- bzw. Lösungspolymerisation, wobei die Reaktionskomponenten durch die Rohre eines Kreislaufreaktors geführt werden.

Die Polymerisation von zum Beispiel Acrylnitril mit vinylaromatischen Verbindungen wie Styrol, α-Methylstyrol, Vinyltoluol und dergleichen gegebenenfalls unter Verwendung radikalischer Initiatoren in einem Rührkessel ist bekannt. Die Reaktionswärme kann dabei entweder über die Wand oder durch Siede- oder Rückflußkühlung abgeführt werden (DE 34 30 247, DE 32 37 076, DE 25 04 659), was jedoch bei der Copolymerisation von Vinylaromaten und Acrylnitril nach diesem Verfahren nur bei nicht zu hohen Umsätzen sowie in Gegenwart größerer Mengen an inerten Lösungsmitteln aufgrund der sonst auftretenden nicht handhabbaren höheren Viskositäten möglich ist. Auch darf der Umsatz nicht zu hoch sein, da in kontinuierlichen Rührkesseln bei höheren Umsätzen Produkte mit breiteren Molmassenverteilungen erhalten werden (vgl. Z. Tadmor, Ind. Eng. Chem. Fundam. 1966, 5, 336, und G. Gerrens, Polymerisationstechnik, Ullmans Encyklopädie der technischen Chemie, 4. Aufl., Verlag Chemie, Weinheim, 1980, 107 ff). Da in der Regel die nicht umgesetzten Monomere und das Lösungsmittel aus wirtschaftlichen Gründen in den Reaktor zurückgeführt werden, ist hier ein niedriger Umsatz nachteilig, zumal er auch zu relativ niedrigeren Raum-Zeit-Ausbeuten führt. Die zur Verbesserung der Wärmeabfuhr und zur Handhabung hochviskoser Polymerlösungen entwickelten Rührkessel sind technisch sehr aufwendig (DD 273 265, DD 294 429) und damit sehr teuer.

Die Polymerisation in Rohrreaktoren ist prinzipiell ebenfalls bekannt (EP 519 266). Gleichzeitig können diese Reaktoren auch eine große spezifische Kühlfläche zur Abfuhr der entsprechenden Reaktionswärme besitzen, was Voraussetzung für hohe Raum-Zeit-Ausbeuten ist. In solchen Reaktoren ist es prinzipiell möglich, höhere Viskositäten zu beherrschen, was eine Polymerisation in Gegenwart von geringen mengen an Lösungsmittel und mit hohem Umsatz ermöglicht. Um ein für technisches Reaktoren ausreichend großes Reaktionsvolumen zu erreichen, werden die Rohrreaktoren als Rohrbündelreaktoren konzipiert. Um ein bestimmtes Reaktionsvolumen zu erhalten, stehen 3 Variablen zur Verfügung: Die Länge der einzelnen Rohre, ihr Durchmesser und ihre Anzahl im Rohrbündel. Eine große Anzahl an Rohren im Rohrbündel führt zum Problem, daß nicht alle Rohre gleichmäßig durchströmt werden. Große Durchmesser erniedrigen die spezifische Kühlfläche. Somit dürfen die Rohre aus wirtschaftlichen Gründen eine bestimmte Länge nicht unterschreiten. Aufgrund der Polymerisationsreaktion bildet sich im Verlauf der einzelnen Rohre ein radiales Temperatur- und Strömungsgeschwindigkeitsprofil aus, das zu einer Beeinträchtigung der Wärmeabfuhr führt. Dies kann im Extremfall beim Versuch, zu hohen Raum-Zeit-Ausbeuten zu gelangen, zu einem Durchgehen der Reaktion führen.

Der Erfindung liegt die Aufgabe zugrunde, ein Verfahren und eine Vorrichtung zur Herstellung von Polymerisaten, insbesondere Copolymerisaten aus Vinylaromaten und Acrylnitril, in Gegenwart von möglichst geringen Mengen an Lösungsmittel und mit hohem Umsatz zur Erreichung einer möglichst hohen Raum-Zeit-Ausbeute zu schaffen.

Es wurde überraschend gefunden, daß die Aufgabe dadurch gelöst wird, daß die Polymerisation in einem Kreislaufreaktor durchgeführt wird, der mindestens einen Rohrbündelreaktor mit geraden Rohren aufweist, die von einem flüssigen Wärmeübertragungsmedium umspült werden und der mit mindestens einem statischen Mischer verbunden ist und daß jeder Rohrbündelreaktor aus zwei Wärmetauschern besteht, die durch mindestens eine Zwischenmischstrecke aus mit Wärmeträgermedium umspülten Rohren mit statischen Mischelementen miteinander verbunden sind. Dabei muß das Volumen der Rohrbündelwärmetauscher mindestens 50% des Gesamtvolumens der Anordnung betragen. Die Rohrbündelwärmetauscher enthalten mindestens eine intensive Zwischenmischstrecke, die aus mit Wärmeträgermedium umspülten Rohren mit eingebauten statischen Mischelementen aufgebaut sind. Dabei beträgt die Zahl der Rohre in der Zwischenmischstrecke mindestens zwei, jedoch genauso viel oder weniger als die Zahl der Rohre im Rohrbündelwärmetauscher. Die statischen Mischelemente bestehen aus einem Gerüst ineinandergreifender, sich kreuzender Stege, wie sie unter der Bezeichnung SMX-Mischer der Fa. Sulzer bekannt sind. Zwischen der Anzahl n der von den Reaktionskomponenten durchströmten Rohre der Zwischenmischstrecke und der Anzahl m der von diesen durchströmten Rohre im Rohrbündelwärmetauscher besteht die Beziehung 1 < n ≤ m.

Diese Zwischenmischstrecken führen zu einer Glättung der radialen Strömungs- und Temperaturprofile und damit zu einer Verbesserung der Wärmeübertragung. In den Verbindungsleitungen zwischen den beiden Wärmetauschern können statische Mischer angeordnet sein. Die Reaktionsmasse wird durch eine Kreislaufpumpe umgewälzt. Das Einsatzgemisch wird durch eine Einsatzgemischzufuhr in den Reaktor gefördert. Über einen Austrag wird die Reaktionsmasse aus dem Reaktor in einen Entgasungsextruder geleitet. Dem Reaktor wird eine Mischung aus Frischmonomeren und aus der Entgasung rückgeführten flüchtigen Bestandteilen, die vorher kondensiert wurden, zugeführt.

Nachstehend wird die Erfindung in ihren Einzelheiten näher erläutert:

Mit dem erfindungsgemäßen Verfahren zur Herstellung thermoplastischer Polymerisate werden insbesondere Copolymerisate aus mindestens einem vinylaromatischen Monomeren a) und gegebenenfalls mindestens einem Monomeren b) aus der Gruppe der Nitrile und Ester der (Meth)acrylsäure von Alkoholen mit 1 bis 8 C-Atomen sowie Maleinsäureanhydrid aufgebaut. Als vinylaromatische Monomere kommen in Betracht: Styrol, α-Methylstyrol und auch das para-Methylstyrol. Als bevorzugte Copolymerisate seien genannt die binären Copolymerisate aus Styrol und Acrylnitril, aus α-Methylstyrol und Acrylnitril sowie die ternären Polymerisate von α-Methylstyrol, Styrol und Acrylnitril.

Bezogen auf 100 Gew.-% des Monomerengemisches aus den Monomeren a) und b) können zusätzlich Lösungsmittel in einem Anteil von 1 bis 25 Gew.-%, bevorzugt 2 bis 18 Gew.-% sowie bis zu 5 Gew.-% Wasser angewendet werden. Als inerte Lösungsmittel kommen unpolare Lösungsmittel, wie aromatische Kohlenwasserstoffe, mit 6 bis 12 C-Atomen, insbesondere Benzol, Toluol, Ethyltoluol oder Ethylbenzol in Frage. Besonders bevorzugt wird Ethylbenzol angewendet.

Das erfindungsgemäße Verfahren kann sowohl thermisch als auch unter Verwendung der üblichen Initiatoren, z.B. von organischen Peroxiden oder organischen Azoverbindungen, die dem Fachmann bekannt sind, durchgeführt werden. Diese Starter werden in den dem Fachmann geläufigen Konzentrationen, d.h. im Bereich von 0,001 bis 0,5 Gew.-%, jeweils bezogen auf die Summe der Monomere a) und b) eingesetzt. Dem Fachmann ist bekannt, in welcher Form er diese Initiatoren (als Lösung in Monomeren oder im Lösungsmittel) in den Reaktor, in dem die Polymerisation stattfindet, kontinuierlich zudosieren kann.

Das erfindungsgemäße Verfahren wird in einem hydraulisch gefüllten Reaktor im Temperaturbereich von 50 bis 230 °C, insbesondere bei Temperaturen von 50 bis 180 °C, in einem Druckbereich von 0,1 bar bis 100 bar, insbesondere von 0,5 bis 75 bar, und mit mittleren Verweilzeiten der Monomeren in der Reaktionsmassen von 20 bis 420 Minuten, insbesondere 45 bis 300 Minuten, durchgeführt. Der Reaktor, der als Kreislaufreaktor zu bezeichnen ist, besitzt als wesentliche erfindungsgemäße Bestandteile mindestens einen Rohrbündelreaktor, bestehend aus m Rohren, die von einem Wärmeträgermedium umspült werden, mit je mindestens einer Zwischenmischstrecke, die aus Rohren mit statischen Mischelementen besteht, die von einem Wärmeträgermedium umspült werden, wobei die Zahl n der Rohre der Zwischenmischstrecke 1 < n ≤ m beträgt, mindestens einen statischen Mischer in den Verbindungsleitungen zwischen den Rohrbündelwärmetauschern, mindestens einen Einsatzgemischzulauf, einen Austrag sowie mindestens eine Kreislaufpumpe.

Die Viskosität des Reaktionsmediums kann bis zu 750 Pas, bevorzugt bis zu 500 Pas, betragen. Die Strömungsgeschwindigkeit in den Rohren des Rohrbündelreaktors kann im Bereich von 0,5 bis 20 cm/s, bevorzugt 2 bis 15 cm/s, liegen. Das Kreislaufverhältnis, definiert als der Quotient aus dem durch die Kreislaufpumpe geförderten Massenstrom und dem Massenstrom des Zulaufs, kann im Bereich von 5 bis 125, bevorzugt im Bereich von 10 bis 100, liegen.

Die Austragsmenge aus dem Reaktor entspricht der Zulaufmenge, da der Reaktor hydraulisch gefüllt ist. Der Austrag wird durch ein- oder mehrstufiges Verdampfen von flüchtigen Bestandteilen bis auf weniger als 1 Gew.-%, bezogen auf das Polymerisat, befreit. Die abgetrennten flüchtigen Bestandteile können nach ihrer Kondensation in den Reaktor zurückgeführt werden.

Nachfolgend sind das erfindungsgemäße Verfahren sowie die erfindungsgemäße Vorrichtung anhand von Beispielen beschrieben. Es zeigen:
- Abbildung 1: eine schematische Zeichnung der für die Durchführung der Versuche benutzten Apparatur;
- Abbildung 2: eine schematische Zeichnung des Rohrbündelreaktors mit intensiver Zwischenmischstrecke.

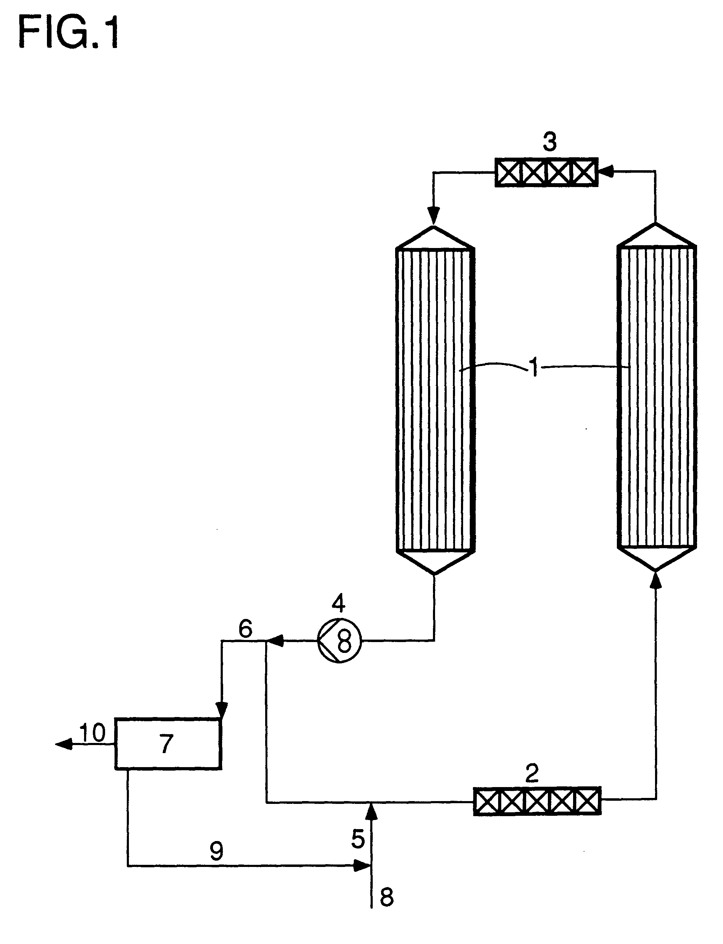

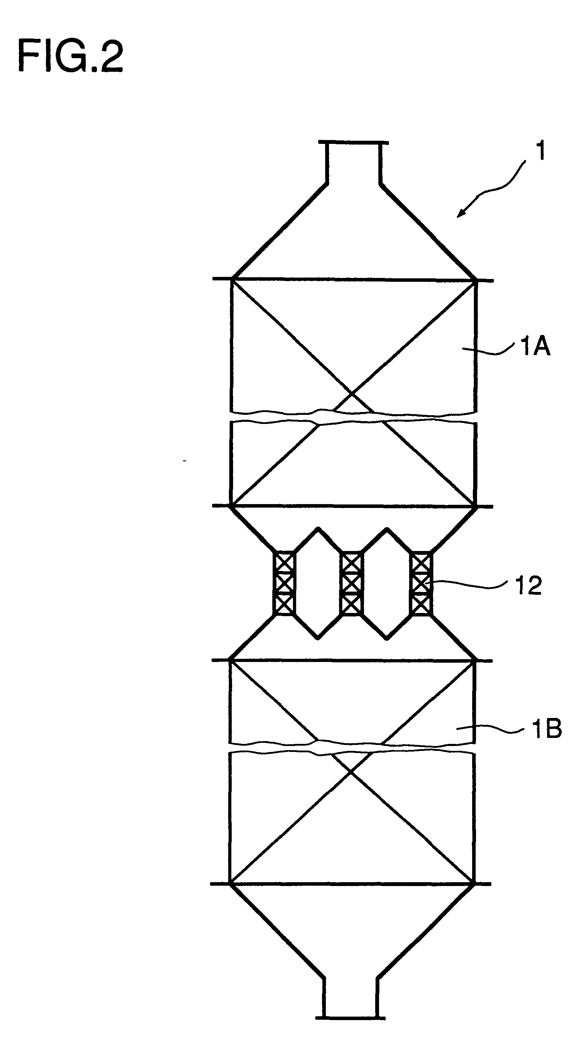

Die Versuche wurden in einer Apparatur durchgeführt, deren Aufbau schematisch in der Abbildung 1 dargestellt ist. Der in dieser verwendete Rohrbündelreaktor 1 ist der Abbildung 2 zu entnehmen. Der Kreislaufreaktor besteht aus 2 je 3 m langen und zweigeteilten Rohrbündelreaktoren 1A und 1B mit je 19 Rohren 1, die einen Innendurchmesser von je 30 mm besitzen. Die Rohrbündelreaktoren enthalten in ihrer Mitte jeweils eine 30 cm lange Zwischenmischstrecke 12, die aus je 5 Rohren bestehen, in denen sich jeweils statische SMX-Mischelemente der Firma Sulzer befinden. Die Mischelemente dieser SMX-Mischer bestehen aus einem Gerüst ineinandergreifender, sich kreuzender Stege. Solche SMX-Mischer werden vorwiegend im laminaren Strömungsbereich verwendet. Die Rohrbündelreaktoren 1A und 1B sowie die Zwischenmischstrecken 12 werden mit flüssigem Wärmeträger umspült. Zum Reaktor gehören des weiteren zwei statische SMX-Mischer der Firma Sulzer 2 und 3, eine Kreislaufpumpe 4, ein Einsatzgemischzulauf 5, ein Austrag 6 sowie ein Entgasungsextruder 7.Das Volumen des gesamten Reaktors beträgt 100 1.

In den Reaktor wird über den Einsatzgemischzulauf 5 eine Mischung aus Frischmonomeren eingeleitet, die über die Leitung 8 zugeführt werden, sowie aus der Entgasung stammende flüchtige Bestandteile, die kondensiert wurden und die über die Leitung 9 rückgeführt werden. Die über die Leitung 6 ausgetragene Reaktionsmasse wird dem Verdampfer-Extruder 7 zugeführt, in dem die flüchtigen Bestandteile über die Leitung 9 abgezogen werden. Das Copolymerisat aus dem Extruder 7 wird in Form von Strängen über die Leitung 10 ausgetragen, abgekühlt und granuliert.

### Beispiel 1

Im stationären Zustand wurden der Polymerisationsanlage eine Mischung aus Frischmonomeren sowie der kondensierten flüchtigen Bestandteile aus dem Entgasungsextruder, die gegebenenfalls von unerwünschten Bestandteilen befreit wurden, zugeführt. Die Zusammensetzung der in den Reaktor gepumpten Monomerzufuhr wurde so gewählt, daß das Copolymerisat 35 Gew.-% Acrylnitril und 65 Gew.-% Styrol enthielt. Der Gehalt an Ethylbenzol, bezogen auf die gesamte Reaktionsmasse im Reaktor, betrug 15 Gew.-%. Das Kreislaufverhältnis betrug 45, die mittlere Verweilzeit 2,5 Stunden und die Reaktionstemperatur 145 °C. Die Raum-Zeit-Ausbeute betrug 0,17 kg/h·1.

### Beispiel 2

Wie Beispiel 1, jedoch betrug die Reaktionstemperatur 155 °C. Die Raum-Zeit-Ausbeute betrug 0,20 kg/h·1.

### Beispiel 3

Wie Beispiel 1, jedoch betrug die Reaktionstemperatur 165 °C. Die Raum-Zeit-Ausbeute betrug 0,22 kg/h·1.

### Beispiel 4

Wie Beispiel 1, jedoch betrug die Reaktionstemperatur 170 °C und die mittlere Verweilzeit 2,2 Stunden und der Anteil an Ethylbenzol 12%. Die Raum-Zeit-Ausbeute betrug 0,33 kg/h·1.

### Beispiel 5

Wie Beispiel 1, jedoch betrug die Reaktionstemperatur 170 °C und die mittlere Verweilzeit 1,9 Stunden und der Anteil an Ethylbenzol 10%. Die Raum-Zeit-Ausbeute betrug 0,37 kg/h·1.

### Vergleichsbeispiele

Die Vergleichsbeispiele wurden in einem Reaktor durchgeführt, der wie der oben beschriebene aufgebaut ist, jedoch ohne intensive Zwischenmischstrekken. Auch in diesem Fall betrug das Gesamtvolumen des Reaktors 100 1.

### Vergleichsbeispiel 1

Versuchsbedingungen wie in Beispiel 1 beschrieben. Die Raum-Zeit-Ausbeute betrug 0,16 kg/h·1.

### Vergleichsbeispiel 2

Versuchsbedingungen wie in Beispiel 1 beschrieben, jedoch bei 170 °C Reaktionstemperatur, einer mittleren Verweilzeit von 2,1 Stunden und einem Gehalt von 12 Gew.-% Ethylbenzol. Die Raum-Zeit-Ausbeute betrug 0,29 kg/h·1.

### Vergleichsbeispiel 3

Versuchsbedingungen wie in Beispiel 1 beschrieben, jedoch bei 169 °C Reaktionstemperatur, einer mittleren Verweilzeit von 2,4 Stunden und einem Gehalt von 12 Gew.-% Ethylbenzol. Es konnte kein stationärer Betriebszustand erreicht werden, da die Reaktionstemperatur Schwankungen um +/-1,5 °C aufwies. Die Raum-Zeit-Ausbeute schwankte zwischen 0,31 und 0,33 kg/h·l.

### Vergleichsbeispiel 4

Versuchsbedingungen wie in Beispiel 1 beschrieben, jedoch bei 171 °C Reaktionstemperatur, einer mittleren Verweilzeit von 2,3 Stunden und einem Gehalt von 11 Gew.-% Ethylbenzol. Ca. 5 Stunden nach Einstellung der neuen Versuchsbedingungen wurde die Reaktion unkontrollierbar und ging durch.

Der Vergleich der nach dem erfindungsgemäßen Verfahren mit der für dieses entwickelten Vorrichtung durchgeführten Versuchsbeispiele zeigt, daß die hier erzielten Ergebnisse bezüglich der Raum-Zeit-Ausbeute beträchtlich besser sind, als die nach dem bekannten Verfahren durchgeführten Vergleichsversuche.

## Patentansprüche

1. Verfahren zur kontinuierlichen Herstellung von Polymeren aus Reaktionskomponenten, insbesondere von Copolymeren aus Styrol und Acrylnitril, durch Masse- bzw. Lösungspolymerisation, wobei die Reaktionskomponenten durch die Rohre eines Kreislaufreaktors geführt werden, **dadurch gekennzeichnet, daß** der Kreislaufreaktor mindestens einen Rohrbündelreaktor mit geraden Rohren aufweist, die von einem flüssigen Wärmeübertragungsmedium umspült werden und daß jeder Rohrbündelreaktor aus mindestens zwei Rohrbündelwärmetauschern besteht, die durch mindestens eine Zwischenmischstrecke, die aus mit Wärmeträgermedium umspülten Rohren mit eingebauten statischen Mischelementen aufgebaut ist, miteinander verbunden sind.

2. Verfahren nach Anspruch 1, **dadurch gekennzeichnet, daß** das Volumen der Rohrbündelwärmetauscher mindestens 50% des Gesamtvolumens der Anordnung beträgt, und/oder daß in den Rohren der Zwischenmischstrecken Gerüste ineinandergleitender, sich kreuzender Stege umströmt werden, und/oder daß für die Anzahl n der von den Reaktionskomponenten durchströmten Rohre der Zwischenmischstrecke und die Anzahl m der von diesen durchströmten Rohre im Rohrbündelwärmetauscher die Beziehung 1 < n ≤ m besteht, und/oder daß die Reaktionskomponenten zwischen zwei Rohrbündelreaktoren durch ein statisches Mischelement geführt werden, und/oder daß dem Kreislaufreaktor Gemische aus mindestens einem vinylaromatischen Monomeren, vorzugsweise Styrol, α-Methylstyrol und/oder para-Methylstyrol und gegebenenfalls mindestens einem Monomeren aus der Gruppe der Nitrile der (Meth)acrylsäure und der Ester der (Meth)acrylsäure mit Alkoholen mit 1 bis 8 C-Atomen, sowie Maleinsäureanhydrid, zugeführt werden, und/oder daß bei der Lösungspolymerisation als Lösungsmittel aromatische Kohlenwasserstoffe mit 6 bis 12 C-Atomen, insbesondere Benzol, Toluol, Ethyltoluol oder Ethylbenzol eingesetzt werden, wobei vorzugsweise bezogen auf 100 Gew.-% des Monomerengemisches zusätzlich Lösungsmittel in einem Anteil von 1 bis 25 Gew.-%, bevorzugt 2 bis 18 Gew.-%, sowie bis zu 5 Gew.-% Wasser zugeführt werden, insbesondere **dadurch gekennzeichnet, daß** alle vorstehenden Merkmale ' vorliegen.

3. Verfahren nach einem der vorhergehenden Ansprüche, **dadurch gekennzeichnet, daß** die Reaktionstemperatur im Reaktor im Bereich von 50 bis 230 °C, vorzugsweise von 50 bis 180 °C, und der Druck im Bereich von 0,1 bis 100 bar, vorzugsweise von 0,5 bis 75 bar, liegt, und/oder daß die mittlere Verweilzeit der Monomeren in der Reaktionsmasse 20 bis 420 Minuten, vorzugsweise 45 bis 300 Minuten beträgt, und/oder daß die Strömungsgeschwindigkeit des Reaktionsmediums im Rohrbündelreaktor im Bereich von 0,5 bis 20 cm/s, vorzugsweise im Bereich von 2 bis 15 cm/s, liegt, und/oder daß die Viskosität des Reaktionsmediums maximal 750 Pas, vorzugsweise maximal 500 Pas beträgt, und/oder daß das Massenverhältnis des im Kreislauf geförderten Massenstroms zu dem Massenstrom des Zulaufs im Bereich von 5 bis 125, vorzugsweise im Bereich von 10 bis 100 liegt, insbesondere **dadurch gekennzeichnet, daß** alle vorstehenden Merkmale vorliegen.

4. Vorrichtung zur Durchführung des Verfahrens nach einem der vorhergehenden Ansprüche, **dadurch gekennzeichnet, daß** der Kreislaufreaktor mindestens einen Rohrbündelreaktor (1) mit geraden Rohren aufweist, deren Außenflächen von einem flüssigen Wärmeübetragungsmedium umspülbar sind und daß jeder Rohrbündelreaktor (1) aus mindestens zwei Rohrbündelwärmetauschern (1A, 1B) besteht, die durch mindestens einen statischen Mischer (12), der aus mit Wärmeträgermedium umspülten Rohren mit eingebauten statischen Mischelementen aufgebaut ist, miteinander verbunden sind.

5. Vorrichtung nach Anspruch 4, **dadurch gekennzeichnet, daß** der Rohrbündelreaktor (1) mit mindestens einem statischen Mischer (2, 3) verbunden ist und daß mindestens ein Einsatzgemischzulauf (5) für die Zuführung der Monomere, ein Auslauf (6) für die Polymere sowie eine Kreislaufpumpe (4) vorgesehen sind, wobei vorzugsweise der Auslauf (6) mit einem Entgasungsextruder (7) verbunden ist, wobei vorzugsweise der Entgasungsextruder (7) über einen Kondensator für flüchtige Bestandteile mit dem Einsatzgemischzulauf (5) verbunden ist.

6. Vorrichtung nach einem der Ansprüche 4 oder 5, **dadurch gekennzeichnet, daß** der Einsatzgemischzulauf (5) über einen statischen Mischer (2) an ein Ende eines Rohrbündelreaktors (1) angeschlossen ist, dessen anderes Ende über einen weiteren statischen Mischer (3) mit einem Ende eines weiteren Rohrbündelreaktors (1) in Verbindung steht, dessen anderes Ende mit dem Zulauf einer Kreislaufpumpe (4) in Verbindung steht, deren Ausgang mit dem Auslauf (6) sowie zur Bildung eines Kreislaufs mit dem Einsatzgemischzulauf (5) verbunden ist.

7. Vorrichtung nach einem der Ansprüche 4 bis 6, **dadurch gekennzeichnet, daß** die statischen Mischelemente in den Mischern (2, 3, 12) aus einem Gerüst ineinandergreifender, sich kreuzender Stege aufgebaut sind.

## Claims

1. A process for the continuous preparation of polymers from reaction components, in particular of copolymers of styrene and acrylonitrile, by bulk or solution polymerization, where the reaction components are passed through the tubes of a recycle reactor, wherein the recycle reactor has at least one tube bundle reactor with straight tubes around which a liquid heat transfer medium flows, and wherein each tube bundle reactor consists of at least two shell and tube heat exchangers which are connected together by at least one intermediate mixing section which is constructed from tubes around which heat transfer medium flows and which have built-in static mixing elements.

2. A process as claimed in claim 1, wherein the volume of the shell and tube heat exchangers amounts to at least 50% of the total volume of the arrangement, and/or wherein flow in the tubes of the intermediate mixing sections takes place around frameworks of intermeshing, mutually crossing arms, and/or wherein the relation between the number n of tubes, through which the reaction components flow, in the intermediate mixing section and the number m of tubes through which the latter flow in the shell and tube heat exchanger is 1 < n ≤ m, and/or wherein the reaction components are passed between two tube bundle reactors through a static mixing element, and/or wherein mixtures of at least one vinylaromatic monomer, preferably styrene, αmethylstyrene and/or para-methylstyrene and, where appropriate, at least one monomer from the group of nitriles of (meth)acrylic acid and of esters of (meth)acrylic acid with alcohols having 1 to 8 C atoms, and maleic anhydride, are fed to the recycle reactor, and/or wherein the solvents employed in the solution polymerization are aromatic hydrocarbons having 6 to 12 C atoms, in particular benzene, toluene, ethyltoluene or ethylbenzene, where additionally solvents in a proportion of from 1 to 25% by weight, preferably 2 to 18% by weight, and up to 5% by weight of water are preferably fed in based on 100% by weight of the monomer mixture, especially wherein all the above features are present.

3. A process as claimed in either of the preceding claims, wherein the reaction temperature in the reactor is in the range from 50 to 230°C, preferably from 50 to 180°C and the pressure is in the range from 0.1 to 100 bar, preferably from 0.5 to 75 bar, and/or wherein the average holdup time of the monomers in the reaction mass is from 20 to 420 minutes, preferably 45 to 300 minutes, and/or wherein the flow rate of the reaction medium in the tube bundle reactor is in the range from 0.5 to 20 cm/s, preferably in the range from 2 to 15 cm/s, and/or wherein the viscosity of the reaction medium does not exceed 750 Pas, preferably does not exceed 500 Pas, and/or wherein the mass ratio of the mass flow recycled to the mass flow fed in is in the range from 5 to 125, preferably in the range from 10 to 100, especially wherein all the above features are present.

4. An apparatus for carrying out the process as claimed in any of the preceding claims, wherein the recycle reactor has at least one tube bundle reactor (1) with straight tubes around whose outer surfaces a liquid heat transfer medium can flow, and wherein each tube bundle reactor (1) consists of at least two shell and tube heat exchangers (1A, 1B) which are connected together by at least one static mixer (12) which is constructed from tubes around which heat transfer medium flows and which have built-in static mixing elements.

5. An apparatus as claimed in claim 4, wherein the tube bundle reactor (1) is connected to at least one static mixer (2, 3) and wherein at least one feed mixture inlet (5) for feeding in the monomers, an outlet (6) for the polymers, and a circulating pump (4) are provided, where the outlet (6) is preferably connected to a vented extruder (7), where the vented extruder (7) is preferably connected via a condenser for volatile constituents to the feed mixture inlet (5).

6. An apparatus as claimed in either of claims 4 or 5, wherein the feed mixture inlet (5) is connected via a static mixer (2) to one end of a tube bundle reactor (1) whose other end is connected via another static mixer (3) to one end of another tube bundle reactor (1) whose other end is connected to the inlet of a circulating pump (4) whose outlet is connected to the outlet (6) and, to form a circulation, to the feed mixture inlet (5).

7. An apparatus as claimed in any of claims 4 to 6, wherein the static mixing elements in the mixers (2, 3, 12) are constructed of a framework of intermeshing, mutually crossing arms.

## Revendications

1. Procédé de fabrication continue de polymères constitués de composants de réaction, en particulier de copolymères du styrène et de l'acrylonitrile, par polymérisation en masse ou en solution, les composants de la réaction étant envoyés dans les tubes d'un réacteur en circuit fermé, **caractérisé en ce que** le réacteur en circuit fermé comporte au moins un réacteur à faisceau tubulaire avec des tubes rectilignes, qui sont baignés par un fluide caloporteur liquide, et **en ce que** chaque réacteur à faisceau tubulaire est constitué d'au moins deux échangeurs de chaleur à faisceau tubulaire, qui communiquent l'un avec l'autre par au moins une zone de mélange intermédiaire, qui est constituée de tubes baignés par le fluide caloporteur, dans lesquels sont insérés des éléments mélangeurs statiques.

2. Procédé selon la revendication 1, **caractérisé en ce que** le volume de l'échangeur de chaleur à faisceau tubulaire est d'au moins 50 % du volume total du dispositif, et/ou que, dans les tubes des zones de mélange intermédiaires, des charpentes de traverses croisées glissant les unes dans les autres sont baignées par le courant, et/ou on a la relation 1 < n ≤ m pour le nombre n des tubes de la zone de mélange intermédiaire traversés par les composants de réaction et le nombre m des tubes, traversés par ces composants, se trouvant dans l'échangeur de chaleur à faisceau tubulaire, et/ou **en ce que** les composants de la réaction sont envoyés entre deux réacteurs à faisceau tubulaire en passant par un élément mélangeur statique, et/ou **en ce que** l'on introduit dans le réacteur en circuit fermé des mélanges d'au moins un monomère vinylaromatique, de préférence le styrène, l'α-méthylstyrène et/ou le paraméthylstyrène, et éventuellement d'au moins un monomère choisi dans l'ensemble comprenant les nitriles de l'acide (méth)acrylique et les esters de l'acide (méth)acrylique et d'alcools ayant de 1 à 8 atomes de carbone, ainsi que l'anhydride maléique, et/ou **en ce que**, lors de la polymérisation en solution, on utilise en tant que solvant des hydrocarbures aromatiques ayant de 6 à 12 atomes de carbone, en particulier le benzène, le toluène, l'éthyltoluène ou l'éthylbenzène, ce à l'occasion de quoi on introduit de préférence, pour 100 parties en poids du mélange de monomères, une quantité additionnelle de solvant en une quantité de 1 à 25 % en poids et de préférence de 2 à 18 % en poids, et aussi jusqu'à 5 % en poids d'eau, en particulier **caractérisé par** la présence de toutes les caractéristiques ci-dessus.

3. Procédé selon l'une des revendications précédentes, **caractérisé en ce que** la température de réaction dans le réacteur est comprise entre 50 et 230°C et de préférence entre 50 et 180°C, et la pression est comprise entre 0,1 et 100 bar et de préférence entre 0,5 et 75 bar, et/ou **en ce que** le temps de séjour moyen des monomères dans la masse réactionnelle est de 20 à 420 minutes et de préférence de 45 à 300 minutes, et/ou **en ce que** la vitesse d'écoulement du milieu réactionnel dans le réacteur à faisceau tubulaire est comprise entre 0,5 et 20 et de préférence entre 2 et 15 cm/s, et/ou **en ce que** la viscosité du milieu réactionnel est au maximum de 750 Pa.s et de préférence au maximum de 500 Pa.s, et/ou **en ce que** le rapport en masse du débit massique refoulé dans le circuit fermé et le débit massique du courant de charge est compris entre 5 et 125 et de préférence entre 10 et 100, en particulier **caractérisé par** la présence de l'ensemble des caractéristiques ci-dessus.

4. Appareillage pour mettre en oeuvre le procédé selon l'une des revendications précédentes, **caractérisé en ce que** le réacteur en circuit fermé comporte au moins un réacteur à faisceau tubulaire (1) avec des tubes rectilignes, dont la surface extérieure peut être baignée par un fluide caloporteur liquide, et **en ce que** chaque réacteur à faisceau tubulaire (1) est constitué d'au moins deux échangeurs de chaleur à faisceau tubulaire (1A, 1B), qui communiquent l'un avec l'autre par au moins un mélangeur statique (12), qui est construit à partir de tubes baignés par le fluide caloporteur, et dans lesquels sont insérés des éléments mélangeurs statiques.

5. Appareillage selon la revendication 4, **caractérisé en ce que** le réacteur à faisceau tubulaire (1) communique avec au moins un mélangeur statique (2, 3), et **en ce qu'**on prévoit au moins un système (5) d'amenée du mélange de charge pour amener les monomères, un système d'évacuation (6) des polymères, ainsi qu'une pompe de recyclage (4), le système d'évacuation (6) communiquant de préférence avec une extrudeuse à dégazage (7), l'extrudeuse à dégazage (7) communiquant de préférence par l'intermédiaire d'un condenseur pour les constituants volatils avec le système (5) d'amenée du mélange de charge.

6. Appareillage selon l'une des revendications 4 ou 5, **caractérisé en ce que** le système d'amenée (5) du mélange de charge est raccordé par l'intermédiaire d'un mélangeur statique (2) à une extrémité d'un réacteur à faisceau tubulaire (1) dont l'autre extrémité communique par l'intermédiaire d'un autre mélangeur statique (3) avec un extrémité d'un autre réacteur à faisceau tubulaire (1) dont l'autre extrémité communique avec l'alimentation d'une pompe de recyclage (4) dont la sortie communique avec le système d'évacuation (6) et aussi pour former un circuit fermé avec le système (5) d'amenée du mélange de charge.

7. Appareillage selon l'une des revendications 4 à 6, **caractérisé en ce que** les éléments mélangeurs statiques sont, dans les mélangeurs (2, 3, 12), construits à partir d'une charpente de traverses croisées entrant en prise les unes avec les autres.
